## Europäisches Patentamt
## European Patent Office
## Office européen des brevets

(11) Veröffentlichungsnummer: **0 266 439**
**A1**

(12) # EUROPÄISCHE PATENTANMELDUNG

(21) Anmeldenummer: 86115174.4

(51) Int. Cl.⁴: **B29C 49/46**

(22) Anmeldetag: 01.11.86

(43) Veröffentlichungstag der Anmeldung:
11.05.88 Patentblatt 88/19

(84) Benannte Vertragsstaaten:
AT BE CH DE ES FR GB GR IT LI LU NL SE

(71) Anmelder: PVI Patent-Verwertungs- und
Innovations-Gesellschaft mbH
Stieffring 2
D-1000 Berlin 13(DE)

(72) Erfinder: Birlefert, Claus, Prof. Dr.
Meisenstrasse 60
D-4437 Schöppingen(DE)
Erfinder: Hoffmann, Manfred, Dipl.-Ing.
Alt Meteiner Weg 23
D-4434 Ochtrup(DE)

(74) Vertreter: Patentanwälte Schulze Horn und
Hoffmeister
Goldstrasse 36
D-4400 Münster(DE)

(54) **Verfahren zur Herstellung von Hohlkörpern mit Innenfluorierung.**

(57) Verfahren und Vorrichtung zur Herstellung von wenigstens an der Innenoberfläche fluorierten Hohlkörpern durch Blasformen aus thermoplastischen Kunststoffen, wobei ein erhitzter Vorformling mittels eines Blasgases in der Blasform zu einem Hohlkörper aufgeblasen wird. Das Blasgas wird fluorfrei gehalten. Nach dem Aufblasen des Hohlkörpers wird das Blasgas durch Ablassen, Abpumpen und/oder Spülen unter Druckerniedrigung im wesentlichen aus dem Hohlkörper entfernt. Dann wird der Hohlkörper unter Belassung einer während des Blasformens erlangten und während des vorhergehenden Arbeitsschrittes nur unwesentlich erniedrigten Innenwandtemperatur mit einem Fluor enthaltenden Behandlungsgas beschickt. Nach Abschluß der Behandlung wird das fluorhaltige Gas wieder aus dem Hohlkörper entfernt. Die Behandlung mit dem fluorhaltigen Gas geschieht entweder in der Blasform selbst oder in einer Hilfsform, in die der Hohlkörper unmittelbar nach dem Blasen überführt wird.

## Verfahren und Vorrichtung zur Herstellung von Hohlkörpern mit Innenfluorierung

Die Erfindung betrifft ein Verfahren und eine Vorrichtung zur Herstellung von wenigstens an der Innenoberfläche fluorierten Hohlkörpern durch Blasformen aus thermoplastischen Kunststoffen, wobei ein erhitzter Vorformling mittels eines Blasgases in der Blasform zu einem Hohlkörper aufgeblasen und mittels einer fluorhaltigen Gasfüllung an seiner erhitzten Innenoberfläche fluoriert wird und nach Abschluß der Behandlung das fluorhaltige Gas wieder aus dem Hohlkörper entfernt wird.

Es ist bekannt, Hohlkörper aus thermoplastischen Kunststoffen im Blasformverfahren herzustellen. Im allgemeinen wird hierzu ein extrudiertes Schlauchstück als Vorformling verwendet, das in einer Blasform zu einem Hohlkörper entsprechend der Innenkontur der Blasform aufgeblasen wird. Als thermoplastische Kunststoffe eignen sich vor allem Polymere und Copolymere von Olefinen sowie von Styrol, Acrylnitril oder Vinylchlorid. Bevorzugt werden Polyolefin-Polymere oder Copolymere des Ethylens oder Propylens verwendet. Sie können zusätzlich wahlweise Bestandteile enthalten, wie Pigmente, Füllstoffe, Mattierungsmittel, Weichmacher, Brandschutzmittel, Antistatica, Antioxidantien und andere bekannte Additive, um die chemischen und physikalischen Eigenschaften des fertigen thermoplastischen Produktes zu beeinflussen. Diese Mischungen können auch andere, mit dem Polyolefin gemischte Kunststoffe enthalten.

Derartige, im Blasformverfahren gewonnene Hohlkörper haben jedoch eine relativ hohe Permeationsrate, d. h. flüchtige Stoffe entweichen durch die Außenwand des Hohlkörpers nach außen. Insbesondere bei Kraftstoffbehältern ist dies äußerst unerwünscht. Eine Verringerung der Permeation kann dadurch erreicht werden, indem die innere Oberfläche des Behälters einige Zeit der Einwirkung eines elementaren, Fluor enthaltenden Behandlungsgases ausgesetzt wird. Die Oberfläche wird hierbei durch Fluor in Form von Fluorkohlenstoff-und Fluorkohlenwasserstoff-Verbindungen belegt. Diese fluorhaltige Schicht setzt die Permeationsrate erheblich herab. Wenn man das fluorhaltige Behandlungsgas zugleich als Blasmedium beim Extrusions-Flasformen von Hohlkörpern verwendet, spricht man von der sogenannten In-line-Fluorierung. Ein derartiges Verfahren ist beispielsweise bekannt aus der DE-PS 24 01 948.

Nach dem bekannten Verfahren wird das Blasgas, das den Vorformling expandiert, mit 0,1 - 10 Vol.-% Fluorgas gemischt. Der Rest des Blasgases besteht aus einem Inertgas, d. h. einem Gas, das unter Behandlungsbedingungen weder mit Fluor noch mit der Kunststoff-Oberfläche reagiert.

Bei dem Blasvorgang selbst wird das fluorhaltige Blasgas mit Blasdrücken von 5 - 10 bar in den Vorformling eingedrückt. Dementsprechend ist eine relativ große Menge an Fluor notwendig. Gleichzeitig entsteht Fluorwasserstoff. Es fällt demnach eine relativ große Menge an Gas an, das entweder von Fluorwasserstoff befreit oder entsorgt werden muß. Die bekannt hohe Aggressivität des Fluors macht daher recht aufwendige Apparaturen erforderlich, um dieses Gasgemisch aufzuarbeiten oder zu entsorgen. Insbesondere ist die Verwendung dieses Blasgases im Kreislauf bei kontinuierlicher Entfernung von Fluorwasserstoff erfahrungsgemäß - schwierig zu handhaben.

Es stellt sich demgegenüber die Aufgabe, bei einem Verfahren der eingangs genannten Art eine Verfahrensweise anzugeben, die das Aufarbeiten wesentlich vereinfacht oder Entsorgen der fluorhaltigen Gase sogar überflüssig macht, die mit geringeren fluorhaltigen Gasmengen auskommt und die es schließlich ermöglicht, bei niedrigeren Drücken zu fluorieren. Letzteres bedeutet, daß bei gleicher Arbeitssicherheit preiswertere, nur auf niedrigere Drücke ausgelegte Apparaturen verwendbar sind.

Diese Aufgaben werden gelöst bei einem Verfahren zur Herstellung von an der Innenoberfläche fluorierten Hohlkörpern aus thermoplastischem Kunststoffen durch Blasformen, bei dem

a) das Blasgas fluorfrei gehalten wird,

b) das Blasgas nach dem Aufblasen des Hohlkörpers durch Ablassen, Abpumpen und/oder Spülen unter Druckerniedrigung im wesentlichen aus dem Hohlkörper entfernt wird,

c) bei dem danach der Hohlkörper unter Belassung einer während des Arbeitsschrittes b) nur unwesentlich erniedrigten Innenwandtemperatur mit einem Fluor enthaltenden Behandlungsgas beschickt wird,

d) und bei dem anschließend das Behandlungsgas auf die Innenoberfläche des Hohlkörpers einwirkt (Behandlung).

Nach dem Einwirken, d. h. nach Abschluß der Behandlung, wird das fluorhaltige Gas in an sich bekannter Weise aus dem Hohlkörper entfernt.

Bei den vorstehend genannten Merkmalen sind folgende Begriffe genannt worden:

l. Blasgas:
Hierunter wird das unter relativ hohem Druck zuzuführende Gas zum Aufblasen des Vorformling zum eigentlichen Hohlkörper verstanden. Dieses Gas ist auf jeden Fall von Fluor frei.

2. Behandlungsgas:
Das Blasgas wird im wesentlichen aus dem Hohlkörper abgelassen und/oder abgepumpt und/oder ausgespült. Der gegebenenfalls verbleibende geringe Rest des Blasgases hat keinerlei druckstabilisierende Funktion, sondern stellt lediglich einen Rest aus inertem Gas dar, das sich anschließend mit dem zugeleiteten, fluorhaltigen Gas problemlos mischt. Diese Gasmischung wird als Behandlungsgas bezeichnet.

Beim eingangs genannten Stand der Technik gemäß DE-PS 24 01 948 sind dagegen das Behandlungs- und Blasgas identisch.

Erfindungswesentlich ist die Verschiedenheit des Blasgases und des der Einwirkung dienenden Behandlungsgases. Die Behandlung, d. h. Einwirkung des fluorhaltigen Gases, vollzieht sich entweder während des Verweilens des Hohlkörpers in der Blasform selbst oder in einer Hilfsform, in die der fertig geblasene Hohlkörper, noch unter Belassung seiner während des Blasformens erlangten und während des Arbeitsschrittes b) nur unwesentlich erniedrigten Innenwand-Temperatur, überführt wird. Die Eigentemperatur der Innenwand des Hohlkörpers, die er während des Blasens in der Blasform erlangt hat, wird demnach nicht wesentlich herabgesetzt, sondern für die Reaktion des Fluors mit der Oberfläche genutzt.

Das vorgenannte Verfahren kann deshalb einmal als "Online-Verfahren" und, soweit eine Überführung in eine Hilfsform durchgeführt wird, als "Semi-On-line-Verfahren" bezeichnet werden.

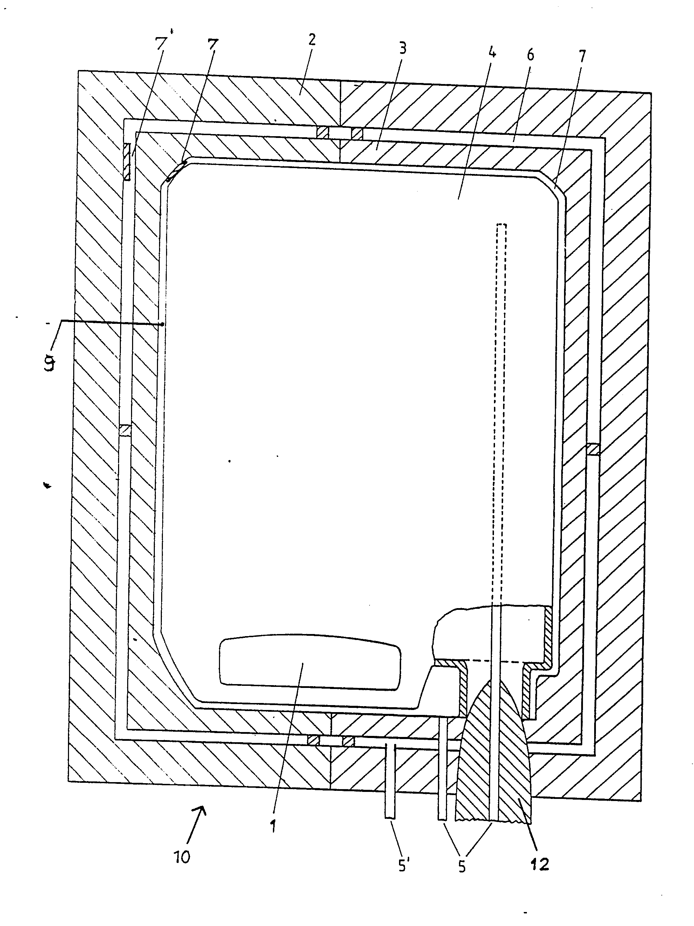

Es sei angemerkt, daß sogenannte Off-line-Verfahren bekannt sind, bei denen zunächst ein Hohlkörper hergestellt wird. Dieser gelangt dann in eine Zwischenstation (Lager), wobei er sich auf die Umgebungstemperatur abkühlt. Die abgekühlten Hohlkörper werden dann in Fluorierungskammern überführt, in denen eine Innenraum-Fluorierung, gegebenenfalls auch unter Erwärmung, durchgeführt werden kann. Es wird hierzu verwiesen auf die Figur I der DE-OS 35 II 743.

Im Gegensatz dazu arbeitet das vorstehende Verfahren nicht in einem Off-Line-System. Vielmehr wird dafür gesorgt, daß die Temperatur der Innenoberfläche 50 °C nicht unterschreitet. Je nach Temperatur, die beim Blasen in der Blasform herrscht, und die von der Konsistenz des Thermoplasten abhängig ist, ist die Obergrenze der Temperatur zu definieren.

Vor der Behandlung mit dem Behandlungsgas sollte die Erweichungs- bzw. Schmelzbereichstemperatur des verwendeten Thermoplasten deutlich unterschritten sein. Trotzdem kann der Hohlkörper unmittelbar nach dem Blasvorgang noch relativ weich sein. Zur Verhinderung des Kollabierens während des Entfernens des Blasgases und des Füllens mit einem fluorhaltigen Gas sowie des Fluorierens selbst wird vorzugsweise in dem die Außenseite des Hohlkörpers umschließenden Raum ein Druck erzeugt, der stets gleich oder geringer ist als der Druck innerhalb des Hohlkörpers. Dies kann beispielsweise dadurch erreicht werden, daß im Raum um den Hohlkörper der Druck durch Abpumpen erniedrigt wird oder daß in der bereits genannten Hilfsform ein entsprechender Druck gesteuert aufrecht erhalten wird.

Vorteilhafterweise wird, um die Füllung mit fluorhaltigem Gas zu verbessern, der Hohlkörper nach dem Blasvorgang und einem Abkühlen bis zur Standfestigkeit, gegebenenfalls unter Erniedrigung des Umgebungsdruckes, bis auf einen Restdruck unter 10 mbar evakuiert und anschließend mit fluorhaltigem Gas beschickt. Mit einem derartigen Evakuierungsschritt wird auch nach der Behandlung gearbeitet, d. h. das Behandlungsgas wird nach dem Behandlungsvorgang ebenfalls durch einen Evakuierungsschritt weitgehend entfernt, so daß in den Spülschritten nur noch wenig Fluor entfernt werden muß.

Wie bekannt, ist die Hauptmenge des Behandlungsgases ein Inertgas, wie Stickstoff, ein Edelgas oder ein Gemisch davon. Dem Behandlungsgas können auch geringe Anteile anderer Gase beigemischt werden, wie dies aus der Technik der Fluorierung bekannt ist, wie z. B. $O_2$, $Cl_2$, $Br_2$, $SO_2$, $SO_3$, $CO$ oder $CO_2$.

Das Behandlungsgas enthält pro Liter vorzugsweise 5 bis 40 Vol.-% Fluor. Diese Werte haben sich als technisch sinnvoll herausgestellt. Es kann insbesondere bei Verwendung von Hilfsformen ein geschlossener Fluorkreislauf aufgebaut werden, dem über einen entsprechenden Regelkreis, der den Fluorgehalt mißt, jeweils entsprechende Fehlmengen beigefügt werden können. Das fluorhaltige Behandlungsgas wird dabei also in einem geschlossenen Kreislauf gehalten, in dem das verbrauchte Fluorgas ergänzbar ist, wobei diesem Kreislauf der bei der Reaktion gebildete Fluorwasserstoff entnommen wird.

Die Einwirkzeit während des Behandlungsvorganges richtet sich nach den üblichen Parametern, wie Fluorkonzentration des Behandlungsgases, Druck und Temperatur, sowie Thermoplast-Eigenschaften. Angestrebt wird eine Einwirkzeit, die nicht unter I s und nicht über 5 min liegt, vorzugsweise eine solche zwischen 5 s und 2 min, so daß die Zykluszeiten des Blasformens nicht oder nicht wesentlich verlängert sind. Bei Verwendung von Hilfsformen ist hier eine größere Freiheit gegeben. Mehrere derartige Hilfsformen können jeweils einer Blasform zugeordnet werden, so daß eine optimale Anpassung an die Taktzeiten möglich ist.

Das erfindungsgemäße Verfahren ist vorteilhaft, da die Taktzeiten der Blasmaschine nicht beeinflußt werden durch zeitliche Abweichungen des Blasvorganges von der Einwirkung des Fluorgases. Die Wärme, die der Kunststoff-Hohlkörper nach dem Blasvorgang noch besitzt, wird ausgenutzt. Praktisch alles Fluor, das während des Behandlungsvorganges nicht zur Behandlung genutzt wird, kann wieder in einen Kreislauf zurückgeführt werden, in dem die Fluorkonzentration automatisch konstant gehalten wird. Der Fluor-Verbrauch ist dadurch überaus gering. Die Drücke sind in dem System so niedrig gehalten, daß sie nie größer als Normaldruck werden, so daß ein sicheres Arbeiten möglich ist. Beispielsweise werden bei der Behandlung von fünf 5-Liter-Behältern aus Polyethylen hoher Dichte pro Behandlungsgang und 150 Zyklen pro Stunde insgesamt nur 80 g Fluor verbraucht, wovon lediglich ca. 4 g Fluor entsorgt werden müssen, während der Rest für die Reaktion mit der Kunststoff-Oberfläche nutzbar ist.

Zur Erläuterung typischer Verfahrensschritte werden drei Beispiele beschrieben:

Beispiel 1:

Ein extrudierter Schlauch-Abschnitt aus hochmolekularem Polyethylen hoher Dichte, ausreichend für eine 1-Liter-Benzinflasche, wird als Vorformling mit einer Temperatur von 200 °C gebildet und in eine Blasform eingebracht. Der noch plastische expansionsfähige Vorformling wird mit einem Druck von 6 bar mit einem fluorfreien Blasgas (Luft) in 2 s aufgeblasen. Das Blasgas wird anschließend abgelassen. Durch Abpumpen wird ein Druck von 400 mbar in dem Hohlkörper erzeugt. Um das Kollabieren des Hohlkörpers während dieser Phase zu verhindern, wird der Raum um den Hohlkörper in der Blasform über Ventile auf einen Druck von 300 mbar gehalten.

Anschließend wird als Behandlungsgas Stickstoff von 22°C mit 10 Vol.-% Fluorgas aus einem Vorratsgefäß in die sich noch in der Blasform befindende Flasche eingefüllt. Der Innendruck steigt dabei bis auf 900 mbar an. Das Behandlungsgas wird 5 s in der Flasche belassen.

Dann wird das fluorhaltige Gas abgesaugt, von Fluorwasserstoff befreit und in das Gas-Vorratsgefäß zurückgeführt. Die behandelte Flasche wird in der Blasform mit Stickstoff als Spülgas nochmals nachgespült und dann der Form entnommen.

Bei der fluorierten Flasche ist die Permeationsrate für Benzin (unverbleiter Normal-Kraftstoff) gegenüber unfluorierten Gefäßen wesentlich erniedrigt.

Beispiel 2:

Ein 5-Liter-Behälter aus Ethylen-Copolymerisat wird in üblicher Weise geblasen. Der Behälter wird anschließend auf ca. 800 mbar evakuiert. Dann wird aus einem Gas-Vorratsgefäß Fluor-Stickstoff-Gasgemisch mit einem Fluorgehalt von 5 Vol.-% so zugegeben, daß sich im Behälter, der sich während des gesamten Vorganges in der Form befindet, ein Druck von ca. 1000 mbar einstellt. Die Behandlung dauert ca. 10 s. Nach der Behandlung wird das Behandlungsgas aus dem Behälter entfernt, von Fluorwasserstoff befreit und dem Gas-Vorratsgefäß wieder zugeführt. Der fluorierte 5-Liter-Behälter wird anschließend mit trockener Luft gespült und der Form entnommen.

In den vorgenannten Beispielen 1 und 2 läßt sich der Innendruck des Behälters während der Behandlungszeit konstant halten. Vorzugsweise liegt der Innendruck zwischen 100 mbar und 1000 mbar. Der Zusammenhang zwischen Einwirkzeit, Temperatur, Gaszusammensetzung und Verhalten der entsprechenden Kunststoffe ist aus der Literatur bekannt und braucht nicht durch einzelne Beispiele in diesem Rahmen erläutert zu werden. Während der Einwirkzeit des Behandlungsgases macht die vorliegende Erfindung Gebrauch von bekannten Daten und Erfahrungswerten, wie sie bei der Gasphasenfluorierung ermittelt wurden und wie sie in den einschlägigen Werken auch veröffentlicht worden sind.

Bei dem Semi-On-Line-Verfahren wird eine spezielle Hilfsform verwendet, die in der **Figur** dargestellt ist.

Auch bei der Verwendung von Hilfsformen wird der Kunststoff-Hohlkörper direkt im Anschluß an den Blasprozeß mit elementarem Fluor an seiner Innenoberfläche behandelt. Darüber hinaus ist es möglich, die Hilfsform so auszustatten, daß auch eine Außenbehandlung mit fluoriertem Gas durchgeführt werden kann. Die Anlage wird üblicherweise einer Blasformmaschine beigestellt. Die zur Fluorierung notwendige Anlage, bestehend aus Fluor-Versorgung, Behandlung und Entsorgung, ist so konzipiert, daß die Taktzeiten der Blasmaschine nicht beeinflußt werden. Dazu werden vorteilhafterweise mehrere Hilfsformen einer Blasform zugeordnet. Um eine optimale Nutzung der Eigenwärme und Innenflächen-Temperatur des Hohlkörpers zu erreichen, wird dieser bereits dann der gekühlten Blasform entnommen, wenn er gerade formstabil und standfest geworden ist. Beispielsweise bedeutet dies für Polyethylen hoher Dichte (HDPE) eine Temperatur an der zu behandelnden Innen-Oberfläche von 50 - 150 °C.

Die Hilfsform 10 gemäß Figur besteht aus einem inneren Stützmantel 3, der von einem Außenmantel 2 umgeben ist. Im Innenraum 1 der Hilfsform 10 befindet sich - auf den Kopf gestellt - ein frisch geformter Benzinbehälter als Hohlkörper 4. Zwischen Stützmantel 3 und Außenmantel 2 ist ein Zwischen-Hohlraum 6 eingelassen, der über ein (nicht dargestelltes) Pumpsystem mit Über-oder Unterdruck versehen werden kann. Darüber hinaus kann der Innenraum 1 des Stützmantels 3, der zusammen mit dem Außenmantel 2 ein zweischaliges System bildet, über Gasversorgungs-und Vakuumleitungen 5 evakuiert, oder mit Gas gespült werden. Der Zwischen-Hohlraum 6 und der Innenraum I ist mit Fluorsensoren 7, 7' bestückt. Der Zwischen-Hohlraum 6 dient als Schutzraum, der durch eine Vakuumleitung 5' evakuiert werden kann.

Auf eine besondere Drucksteuerung kann verzichtet werden, da Rohrquerschnitte und Volumina der Hilfsform IO so gewählt sind, daß im Inneren des Hohlkörpers 4 immer ein so geringer Überdruck vorhanden ist, daß der Hohlkörper 4 innerhalb der Hilfsform IO nicht ausgebeult werden kann. Nach dem Ablassen des Blasgases und gegebenenfalls Überführen des Hohlkörpers 4 in die Hilfsform IO wird ein Evakuierungsschritt zwischengeschaltet. Das Blasgas wird bis auf einen Restdruck von IO bis 2 mbar aus dem Hohlkörper 4 gesaugt. Anschließend wird das evakuierte Volumen des Hohlkörpers 4 mit Behandlungsgas (beispielsweise ein $F_2$-$N_2$-Gemisch mit I5 Vol.-% $F_2$) auf einen Druck von 900 bis I000 mbar, also nahe Atmosphärendruck, gebracht.

Beispiel 3:

Ein 5-Liter-Behälter wird aus einem hochmolekularen Polyäthylen hoher Dichte in üblicher Weise geblasen. Der Hohlkörper wird der Form entnommen, sobald seine Formstabilität gewährleistet ist. Beim Entformen wird unter Normaldruck gearbeitet.

Die Hälften der Hilfsform IO gemäß Figur werden auseinandergefahren und der noch warme Hohlkörper 4 eingebracht und positioniert. Da Kunststoff die Wärme schlecht leitet, ist die Außenwandtemperatur des Hohlkörpers 4 zu diesem Zeitpunkt wesentlich geringer als die Innenwandtemperatur. Letztere beträgt etwa 80 ° C.

Die Hilfsform IO ist evakuierbar. Der Stützmantel 3 der Hilfsform umschließt in seiner Geometrie und in den Maßen den Hohlkörper 4 so, daß nur ein geringer Zwischenraum 9 verbleibt. Der Stützmantel 3 befindet sich wiederum in dem Außenmantel 2, der seinerseits als geschlossener und ebenfalls evakuierbarer Behälter ausgebildet ist. Der Hohlkörper wird mit Gasversorgung und Vakuumsystem 5, über einen Hohldorn I2 verbunden. Anschließend erfolgt das Absaugen über Ventilsteuerung derart, daß der Druck um den Hohlkörper 4 herum immer etwas geringer oder gleich ist dem Druck im Hohlkörper 4 selbst.

Das Innere des Hohlkörpers 4 und der relativ kleine Zwischenraum 9 zwischen Hohlkörper 4 und Stützmantel 3 werden über das Vakuumsystem gleichzeitig evakuiert. Anschließend wird das evakuierte Volumen des Hohlkörpers 4 mit Behandlungsgas bis auf einen Druck von 900 - I000 mbar

gefüllt. Nach einer Einwirkzeit von ca. IO s wird das Behandlungsgas, das nunmehr auch geringe Mengen Fluorwasserstoff enthält, bis auf einen Restdruck zwischen IO und 2 mbar aus dem Hohlkörper entfernt. Das entfernte Gas wird in den Fluor-Kreislauf zurückgeführt. Fluorwasserstoff wird über einen gebräuchlichen HF-Absorber entfernt. Die nach diesem Schritt im Hohlkörper 4 verbleibende geringe Gasmenge (ca. 30 mg) wird erneut mit Stickstoff oder Luft aufgefüllt und wieder evakuiert. Dieser Schritt wird gegebenenfalls wiederholt. Das bei den letztgenannten Spülschritten anfallende Gas kann problemlos entsorgt werden.

Praktisch alles Fluor, das während des Behandlungsvorganges nicht mit der Polyethylen-Oberfläche reagiert hat, kann wieder in den geschlossenen Fluor-Kreislauf zurückgeführt werden. In diesem Kreislauf kann der Fluorgehalt automatisch in einfacher Weise konstant gehalten werden, wie dies aus der Literatur bekannt ist.

Die gemäß vorstehendem Beispiel fluorierten Gefäße wurden mit unfluorierten Gefäßen gleicher Art in Bezug auf ihre Permeationsrate verglichen. Sie wurden jeweils mit den Flüssigkeiten Toluol, Cyclohexan bzw. Benzin gefüllt. Nach einer Wartezeit von drei Wochen hatte sich ein gleichmäßiger Gewichtsverlust pro Zeiteinheit eingestellt. Dieser als Permeationsrate bezeichnete Wert war bei den behandelten Gefäßen um 90 - 95 % vermindert.

**Ansprüche**

I. Verfahren zur Herstellung von wenigstens an der Innenoberfläche fluorierten Hohlkörpern durch Blasformen aus thermoplastischen Kunststoffen, wobei ein erhitzter Vorformling mittels eines Blasgases in der Blasform zu einem Hohlkörper aufgeblasen und mittels einer fluorhaltigen Gasfüllung an seiner erhitzten Innenoberfläche fluoriert wird und bei dem nach Abschluß der Behandlung das fluorhaltige Gas wieder aus dem Hohlkörper entfernt wird,
dadurch gekennzeichnet, daß

a) das Blasgas fluorfrei gehalten wird,

b) das Blasgas nach dem Aufblasen des Hohlkörpers durch Ablassen, Abpumpen und/oder Spülen unter Druckerniedrigung im wesentlichen aus dem Hohlkörper entfernt wird,

c) danach der Hohlkörper unter Belassung einer während des Arbeitsschrittes b) nur unwesentlich erniedrigten Innenwandtemperatur mit einem Fluor enthaltenden Behandlungsgas beschickt wird,

d) und daß anschließend das Behandlungsgas auf die Innenoberfläche des Hohlkörpers einwirkt (Behandlung).

2. Verfahren nach Anspruch I, dadurch gekennzeichnet, daß die Temperatur der Innenoberfläche des Hohlkörpers 50°C nicht unterschreitet.

3. Verfahren nach Anspruch I, dadurch gekennzeichnet, daß während des Entfernens des Blasgases und Füllens mit einem fluorhaltigen Gas und während des Fluorierens in dem die Außenseite des Hohlkörpers umschließenden Raum ein Druck erzeugt wird, der stets gleich oder geringer als der Druck innerhalb des Hohlkörpers ist.

4. Verfahren nach Anspruch I bis 3, dadurch gekennzeichnet, die Hauptmenge des Behandlungsgases ein Inertgas, wie Stickstoff, ein Edelgas oder ein Gemisch davon, ist.

5. Verfahren nach Anspruch I bis 4, dadurch gekennnzeichnet, daß das Behandlungsgas pro Liter 5 - 40 Vol.-% Fluor enthält.

6. Verfahren nach einem der Ansprüche I bis 5, dadurch gekennzeichnet, daß die Einwirkzeit des Behandlungsgases zwischen 0,I s bis 5 min, vorzugsweise zwischen I s und 2 min liegt.

7. Verfahren nach einem der Ansprüche I bis 6, dadurch gekennzeichnet, daß dem Behandlungsgas weitere Gase beigemischt werden, wie z.B. $O_2$, $Cl_2$, $Br_2$, $SO_2$, $SO_3$, CO und $CO_2$.

8. Verfahren nach einem der Ansprüche I bis 7, dadurch gekennzeichnet, daß der Hohlkörper während der Behandlung in der Blasform verbleibt.

9. Verfahren nach Anspruch 8, dadurch gekennzeichnet, daß der Druck des Behandlungsgases im Hohlkörper während des Einwirkens zwischen I00 mbar und I000 mbar, vorzugsweise zwischen 900 und I000 mbar liegt.

I0. Verfahren nach einem der Ansprüche I bis 7, dadurch gekennzeichnet, daß der Hohlkörper unmittelbar nach dem Blasen in eine evakuierbare Hilfsform überführt wird, in der die Behandlung stattfindet.

II. Verfahren nach Anspruch I0, dadurch gekennzeichnet, daß der Druck des Behandlungsgases im Hohlkörper während des Einwirkens zwischen I00 und I000 mbar, vorzugsweise zwischen 900 mbar und I000 mbar liegt.

I2. Verfahren nach wenigstens einem der Ansprüche I bis II, dadurch gekennzeichnet, daß der Hohlkörper nach dem Blasvorgang und einem Abkühlen bis zur Standfestigkeit, gegebenenfalls unter Erniedrigung des Umgebungsdruckes, bis auf einen Restdruck unter I0 mbar evakuiert und anschließend mit fluorhaltigem Gas beschickt wird.

I3. Verfahren nach wenigstens einem der Ansprüche I bis I2, dadurch gekennzeichnet, daß das fluorhaltige Behandlungsgas in einem geschlossenen Kreislauf gehalten ist, in dem das verbrauchte Fluorgas ergänzbar ist, wobei diesem Kreislauf der bei der Reaktion gebildete Fluorwasserstoff entnommen wird.

I4. Hilfsform zur Durchführung des Verfahrens nach Anspruch I0 und II, dadurch gekennzeichnet, daß die Hilfsform (I0) unter Belassung eines kleinen Zwischenraumes (9) den Hohlkörper (4) umfaßt.

I5. Hilfsform nach Anspruch I4, dadurch gekennzeichnet, daß diese von einem Schutzraum (6) umgeben ist, der durch einen Außenmantel (2) gebildet ist, wobei im Schutzraum während des Betriebes ein Unterdruck gegenüber dem Innenraum des zu behandelnden Hohlkörpers (4) gegeben ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 176 044 (KAUTEX-WERKE REINOLD HAGEN AG) <br> * Insgesamt * | 1-9 | B 29 C 49/46 |
| X | DE-C-3 523 137 (AUDI) <br> * Insgesamt * | 1 | |
| E | EP-A-0 212 554 (BASF) | 10-15 | |
| E | DE-A-3 535 602 (HEWING) | 1-9 | |
| A,D | US-A-3 862 284 (D.D. DIXON et al.) | | |
| A,D | EP-A-0 196 468 (MESSER GRIESHEIM) | | RECHERCHIERTE SACHGEBIETE (Int. Cl.4) |
| A | DE-A-2 924 797 (CONTINENTAL GROUP) | | B 29 C <br> C 08 J |
| A | DE-A-1 905 094 (BRITISH RESIN PRODUCTS) | | |
| A | US-A-2 811 468 (S.P. JOFFRE) | | |
| A | US-A-4 396 567 (D. RAINVILLE) | | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 26-06-1987 | SZAMOCKI G.J.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 039 929 (AIR PRODUCTS & CHEMICALS)<br><br>- - - - - | | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 26-06-1987 | SZAMOCKI G.J.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82